# EUROPÄISCHE PATENTSCHRIFT

(11) **EP 3 323 697 B1**
(45) Veröffentlichungstag und Bekanntmachung des Hinweises auf die Patenterteilung: **17.11.2021**
(21) Anmeldenummer: 17185292.4
(22) Anmeldetag: 08.08.2017
(51) Int. Cl.: B62D 15/02, G08G 1/14, G01C 21/36, G08G 1/16

(54) **PLANEN EINER TRAJEKTORIE ZUM AUTONOMEN PARKEN EINES KRAFTFAHRZEUGS IN EINER PARKPLATZUMGEBUNG**
PLANNING OF A TRAJECTORY FOR AUTONOMOUS PARKING OF A MOTOR VEHICLE IN A PARKING SPACE ENVIRONMENT
PLANIFICATION D'UNE TRAJECTOIRE PERMETTANT LE STATIONNEMENT AUTONOME D'UN VÉHICULE AUTOMOBILE SUR UN TERRAIN DE PARCAGE

(30) Priorität: 21.11.2016 DE 102016122294
(43) Veröffentlichungstag der Anmeldung: 23.05.2018
(73) Patentinhaber: Valeo Schalter und Sensoren GmbH, 74321 Bietigheim-Bissingen (DE)
(72) Erfinder: Joos, Malte, 74321 Bietigheim-Bissingen (DE)
(74) Vertreter: Pothmann, Karsten

(56) Entgegenhaltungen:
- EP-A1- 1 921 590
- DE-A1-102010 049 585
- DE-A1-102014 211 557
- DE-A1-102014 224 077
- DE-A1-102015 208 590
- US-A1- 2012 188 100

## Beschreibung

Die Erfindung betrifft ein Verfahren zum Planen einer Trajektorie zum autonomen Parken eines Kraftfahrzeugs in einer Parkplatzumgebung mit mehreren Parkplätzen. Ein zweiter Aspekt der Erfindung betrifft ein Steuergerät zum Planen einer Trajektorie zum autonomen Parken eines Kraftfahrzeugs in einer Parkplatzumgebung. Ein weiterer Aspekt der Erfindung betrifft ein Parksystem für eine Parkplatzumgebung.

Aus dem Stand der Technik sind Kraftfahrzeuge bekannt, welche autonom, insbesondere vollautonom oder teilautonom, auf einem Parkplatz einer Parkplatzumgebung, beispielsweise eines Parkhauses, einer Tiefgarage oder eines Parkplatzes, einparken können. Das Kraftfahrzeug kann hierzu einen freien Parkplatz der Parkplatzumgebung ermitteln. Ein anschließender Parkvorgang kann dann durch autonomes Rangieren des Kraftfahrzeugs durchgeführt werden, wobei durch Sensoren des Kraftfahrzeugs durchgehend eine Umgebung des Kraftfahrzeugs überprüft werden muss. Insbesondere kann eine durchgehende Überprüfung des Abstands zu weiteren Kraftfahrzeugen und/oder Hindernissen nötig sein.

Die US 2012 011 29 29 A1 stellt beispielsweise ein Verfahren zur Verfügung, mittels welchem Abmessungen eines parkenden Kraftfahrzeugs ermittelt werden können und anhand der Abmessungen ein geeigneter freier Parkplatz für das Kraftfahrzeug ermittelt werden kann.

Die DE 10 2014 224 077 A1 offenbart ein Verfahren zum assistierten Führen eines Kraftfahrzeugs in einer Parkplatzumgebung, wobei eine abzufahrende Trajektorie abhängig von einem Fahrzeugtyp des Kraftfahrzeugs ermittelt und die Trajektorie zusammen mit einer digitalen Karte der Parkplatzumgebung an das Kraftfahrzeug gesendet wird. Anhand der digitalen Karte und der Trajektorie kann das Kraftfahrzeug autonom auf den Parkplatz fahren, wobei das Kraftfahrzeug währenddessen mittels eines fahrzeugexternen Überwachungssystems überwacht wird.

Die DE 10 2014 211 557 A1 ist als nächstliegender Stand der Technik nach dem Oberbegriff des Anspruchs 1 zu sehen, und zeigt ein Verfahren zum Planen einer Trajektorie zum autonomen Parken eines Kraftfahrzeugs gemäß Oberbegriff der Anspruchs 1. Die DE 10 2010 049 585 A1 und die US 2012/0188100 A1 zeigen weitere Verfahren zum Planen einer Trajektorie eines Kraftfahrzeugs.

Die DE 10 2015 208 590 A1 zeigt eine Vorrichtung zur Bestimmung eines für ein Fahrzeug befahrbaren Raums, mit mindestens einer Erfassungseinheit zum Erfassen von Raumkoordinaten von mindestens einem Objekt in einer Fahrzeugumgebung des Fahrzeugs, und einer Bestimmungseinheit, die dazu ausgebildet ist, anhand der von der Erfassungseinheit erfassten Raumkoordinaten des mindestens einen Objekts und anhand von vorgegebenen Abmessungen des Fahrzeugs einen für das Fahrzeug befahrbaren Raum zu ermitteln.

Es ist Aufgabe der vorliegenden Erfindung, das Planen einer Trajektorie zum autonomen Parken unter weitgehendem Verzicht auf aufwändige Sensorik zu ermöglichen.

Die Aufgabe wird erfindungsgemäß durch die Gegenstände und Verfahren der unabhängigen Patentansprüche gelöst. Vorteilhafte Weiterbildungen der Erfindung sind durch die abhängigen Patentansprüche, die folgende Beschreibung sowie die Figuren beschrieben.

Ein erster Aspekt der Erfindung betrifft ein Verfahren zum Planen einer Trajektorie zum autonomen Parken eines Kraftfahrzeugs in einer Parkplatzumgebung mit mehreren Parkplätzen. Dem erfindungsgemäßen Verfahren liegt die Idee zugrunde, dass eine Trajektorie in einer virtuellen Karte durch Verschieben einer geometrischen Figur, welche das Kraftfahrzeug repräsentieren kann, geplant wird. Dadurch ist die derart geplante Trajektorie dazu geeignet, das Kraftfahrzeug auf den freien Parkplatz einzuparken.

Dabei wird durch eine erste Erfassungseinrichtung der Parkplatzumgebung eine geometrische Figur ermittelt, welche Abmessungen des Kraftfahrzeugs betrifft. Durch eine zweite Erfassungseinrichtung der Parkplatzumgebung wird eine Parkplatzbelegung der mehreren Parkplätze erfasst, wobei insbesondere erfasst wird, ob ein jeweiliger Parkplatz der mehreren Parkplätze frei oder belegt ist. Anhand einer Karte der Parkplatzumgebung wird durch ein Steuergerät der Parkplatzumgebung ein befahrbarer Bereich und/oder ein Sperrbereich der Parkplatzumgebung ermittelt. Die Karte umfasst insbesondere alle der mehreren Parkplätze der Parkplatzumgebung sowie Fahrbereiche, Fahrbahnen und Begrenzungsflächen, insbesondere Wände oder Säulen, der Parkplatzumgebung.

Die erste Erfassungseinrichtung zum Vermessen des Kraftfahrzeugs kann beispielsweise als Lasermesseinheit, Radarsensor, Kamera, insbesondere Mono-Kamera oder Stereo-kamera, Lichtschranke, Ultraschallsensor und/oder Lidar-Sensor ausgebildet sein. Die erste Erfassungseinrichtung kann insbesondere am Eingang der Parkplatzumgebung und/oder an dem Übergabeplatz, an dem der Fahrer das Kraftfahrzeug zum autonomen Parken zurücklässt, angeordnet sein. Die zweite Erfassungseinrichtung zum Ermitteln der Parkplatzbelegung kann beispielsweise als Radarsensor, Gewichtssensor im Untergrund, Lichtschranke, Kamera, insbesondere Mono-Kamera oder Stereo-kamera, Ultraschallsensor und/oder Lidar-Sensor ausgebildet sein.

Anhand der Parkplatzbelegung werden die mehreren Parkplätze als befahrbarer Bereich oder als Sperrbereich ermittelt. Der nicht befahrbare Bereich ist insbesondere eine Gesamtheit aller gesperrten Teilbereiche der Parkplatzumgebung und umfasst vorzugsweise Begrenzungen, wie Hindernisse, Wände und Säulen, der Parkplatzumgebung sowie Bereiche in der Karte der Parkplatzumgebung, die belegte Parkplätze repräsentieren. Der befahrbare Bereich ist insbesondere eine Gesamtheit aller befahrbaren Teilbereiche und umfasst vorzugsweise Fahrbahnen und Bereiche in der Karte der Parkplatzumgebung, die freie Parkplätze repräsentieren. Durch das Steuergerät der Parkplatzumgebung wird eine Trajektorie zum Bewegen der geometrischen Figur auf einen einen freien Parkplatz repräsentierenden Bereich der Karte derart geplant, dass die geometrische Figur niemals den befahrbaren Bereich überlappt oder den befahrbaren Bereich auch nur teilweise verlässt. Die geometrische Figur kann in der, insbesondere digitalen, Karte das Kraftfahrzeug repräsentieren, da die geometrische Figur dessen Abmessungen betrifft.

Das Kraftfahrzeug muss durch das externe Planen der Trajektorie keine umfassende Sensorik zum autonomen Fahren und/oder Parken aufweisen. Beispielsweise weist das Kraftfahrzeug rudimentäre Sensorik auf, ohne das externe Planen der Trajektorie kein autonomes einparken ermöglichen könnte. Es kann vorgesehen sein, dass das Kraftfahrzeug bei einem Einparkvorgang der Trajektorie folgt, ohne dass eine Sensoreinrichtung des Kraftfahrzeugs den Einparkvorgang überwacht. Vorteilhafterweise kann die Trajektorie derart geplant werden, dass die geometrische Figur am Ende der Trajektorie direkt benachbart zu einer weiteren geometrischen Figur, welche ein weiteres Kraftfahrzeug oder ein beliebiges anderes Objekt repräsentieren kann, angeordnet ist. Beispielsweise können die Ecken und/oder Kanten der geometrischen Figur und der weiteren geometrischen Figur direkt nebeneinander oder in einem vorbestimmten Abstand angeordnet sein. Auf dieses Weise kann eine bestmögliche Ausnutzung des zur Verfügung stehenden Parkfläche gewährleistet werden.

Beispielsweise kann die geometrische Figur in der Karte eine Breite aufweisen, die der Breite des Kraftfahrzeugs entspricht, sowie eine Länge, die der Länge des Kraftfahrzeugs entspricht. Da die Trajektorie für die geometrische Figur den befahrbaren Bereich in der Karte niemals verlässt und/oder den Sperrbereich niemals überlappt, ist die Trajektorie beim autonomen Parken des Kraftfahrzeugs auf den freien Parkplatz kollisionsfrei. Das bedeutet, dass für das Kraftfahrzeug beim Abfahren der Trajektorie keine Kollision mit einem weiteren Kraftfahrzeug oder einer Begrenzung der Parkplatzumgebung droht. Aufgrund der kollisionsfreien Trajektorie ist insbesondere keine Abstandsmessung, beispielsweise des Abstands des Kraftfahrzeugs von einem weiteren Kraftfahrzeug oder von einer Begrenzung, beispielsweise einer Wand oder Säule, der Parkplatzumgebung, nötig.

Die geometrische Figur zum Planen der Trajektorie anhand eines tatsächlichen Abmessungswerts des Kraftfahrzeugs und eines vordefinierten Sicherheitsabstands ermittelt. Insbesondere wird die geometrische Figur auf Basis des tatsächlichen Abmessungswerts und erweitert um einen vordefinierten Sicherheitsabstand ermittelt. Beispielsweise kann die geometrische Figur gegenüber dem tatsächlichen Abmessungswert des Kraftfahrzeugs in jede Richtung um den vordefinierten Sicherheitsabstand erweitert sein. Der Sicherheitsabstand beträgt insbesondere 10cm, 20cm, 30cm, 40cm oder 50cm. In diesem Fall ist die geometrische Figur in jeder Richtung um 10cm, 20cm, 30cm, 40cm oder 50cm größer als der entsprechende Abmessungswert des Kraftfahrzeugs. Auf diese Weise ist ein besonders sicheres Einparken ermöglicht, da geringfügige Erfassungsfehler, beispielsweise durch die erste Erfassungseinrichtung, durch den Sicherheitsabstand ausgeglichen werden.

In einer Ausführungsform der Erfindung ist die geometrische Figur im Wesentlichen rechteckig. Durch eine rechteckige geometrische Figur kann die Projektion des Kraftfahrzeugs auf die Fahrbahnebene gut angenähert werden. Außerdem ist eine rechteckige geometrische Figur besonders einfach zu erfassen. Vorzugsweise ist jede Seite der rechteckigen geometrischen Figur um den doppelten Sicherheitsabstand gegenüber dem entsprechenden Abmessungswert des Kraftfahrzeugs erweitert.

In einer Ausführungsform der Erfindung ist jeder einen Parkplatz repräsentierende Bereich in der Karte der Parkplatzumgebung durch jeweilige, insbesondere variable oder feste, Parkplatzgrenzen definiert und der gesamte Bereich innerhalb der jeweiligen Parkplatzgrenzen wird als gesperrter Teilbereich ermittelt, wenn für einen jeweiligen Parkplatz eine Parkplatzbelegung erfasst wurde. Mit anderen Worten wird der gesperrte Teilbereich anhand der jeweiligen Parkplatzgrenzen sowie der Parkplatzbelegung ermittelt und hängt insbesondere nicht von den Abmessungen eines den Parkplatz belegenden Gegenstandes, insbesondere eines weiteren Kraftwagens, ab. Analog kann der gesamte Bereich innerhalb der jeweiligen Parkplatzgrenzen als befahrbarer Teilbereich ermittelt werden, wenn für den jeweiligen Parkplatz keine Parkplatzbelegung erfasst wurde. Auf diese Weise ist eine besonders einfache Ermittlung befahrbarer Bereiche und Sperrbereiche ermöglicht, insbesondere ohne, dass jeder Parkplatz mittels aufwändiger Sensorik erfasst werden muss.

In einer Weiterbildung ist jeder Parkplatz in der Karte der Parkplatzumgebung durch jeweilige variable, von einem Belegungsgrad des Parkplatzes abhängige Parkplatzgrenzen definiert und der gesamte Bereich innerhalb der jeweiligen Parkplatzgrenzen wird als Sperrbereich ermittelt, wenn für einen jeweiligen Parkplatz eine Parkplatzbelegung erfasst wurde. Der Belegungsgrad eines Parkplatzes ist insbesondere von Abmessungen des den Parkplatz belegenden Gegenstandes abhängig. Ist der jeweilige Parkplatz durch den belegenden Gegenstand nicht vollständig belegt, so können die variablen Parkplatzgrenzen in der Karte verschoben werden, sodass sich der nicht befahrbare Bereich innerhalb der jeweiligen variablen Parkplatzgrenzen verkleinert. Auf diese Weise ist eine besonders gute Ausnutzung eines vorhandenen Platzes in der Parkplatzumgebung ermöglicht.

Vorzugsweise ist vorgesehen, dass die geometrische Figur am Ende der Trajektorie vollständig innerhalb des den freien Parkplatz repräsentierenden Bereichs liegt. Insbesondere überlappt die geometrische Figur am Ende der Trajektorie nicht mit den jeweiligen variablen oder festen Parkplatzgrenzen des den Parkplatz repräsentierenden Bereichs. Dadurch, dass die geometrische Figur vollständig innerhalb der jeweiligen Parkplatzgrenzen liegt, ist sichergestellt, dass die geometrische Figur nicht in einen Bereich ragt, der als befahrbar ermittelt wird.

In einer Weiterbildung ist die Trajektorie durch mehrere Teiltrajektorien gebildet, welche nacheinander geplant werden. Insbesondere ist es möglich, dass die Trajektorie eine erste Teiltrajektorie umfasst, welche zuerst für die geometrische Figur geplant wird und weitere Teiltrajektorien, welche anschließend für die geometrische Figur geplant werden. Vorzugsweise befinden sich zwischen den Teiltrajektorien Gangwechselpunkte, an welchen insbesondere eine Richtungsänderung der Bewegung der geometrischen Figur stattfinden. Mit anderen Worten kann die geometrische Figur entlang mehrerer Teiltrajektorien rangiert werden.

In einer Ausführungsform der Erfindung ist vorgesehen, dass das Kraftfahrzeug mittels der für die geometrische Figur geplanten Trajektorie eingeparkt wird. Mit anderen Worten kann das Kraftfahrzeug eine Bewegung gemäß der für die geometrische Figur geplanten Trajektorie ausführen. Durch die für die geometrische Figur geplante Trajektorie kann das Kraftfahrzeug insbesondere kollisionsfrei, insbesondere ohne Kollision mit der Begrenzungsfläche der Parkplatzumgebung und/oder mit dem weiteren Kraftfahrzeug, und ohne weitere Sensorik und/oder Messungen eingeparkt werden.

In einer Weiterbildung ist vorgesehen, dass die für die geometrische Figur geplante Trajektorie dem Kraftfahrzeug mittels einer Kommunikationseinrichtung der Parkplatzumgebung übermittelt wird. Das Kraftfahrzeug kann eine korrespondierende Empfangseinrichtung aufweisen, mittels derer die Trajektorie empfangen wird. Insbesondere kann die Übermittlung der Trajektorie kabellos erfolgen.

In einer bevorzugten Ausführungsform der Erfindung ist vorgesehen, dass das Kraftfahrzeug durch eine dritte Erfassungseinrichtung der Parkplatzumgebung für das Planen der Trajektorie lokalisiert wird. Insbesondere kann dadurch, dass die Position des Kraftfahrzeugs erfasst wird, der geometrischen Figur in der Karte eine Position zugeordnet werden, welche die Position des Kraftfahrzeugs in der Parkplatzumgebung repräsentiert. Dadurch ist sichergestellt, dass die Trajektorie zum Verschieben der geometrischen Figur einen Startpunkt hat, der für das Einparken des Kraftfahrzeugs passend ist.

Ein zweiter Aspekt der Erfindung betrifft ein Steuergerät zum Planen einer Trajektorie zum autonomen Parken eines Kraftfahrzeugs in einer Parkplatzumgebung mit mehreren Parkplätzen. Das Steuergerät umfasst eine Empfangseinheit, die zum Empfangen zumindest einer Abmessungen des Kraftfahrzeugs betreffenden geometrischen Figur und einer Parkplatzbelegung der mehreren Parkplätze ausgebildet ist. Das Steuergerät umfasst außerdem eine Recheneinheit, die zum Ermitteln eines befahrbaren oder Sperrbereichs der Parkplatzumgebung anhand einer Karte der Parkplatzumgebung und anhand der ermittelten Parkplatzbelegung ausgebildet ist. Außerdem ist die Recheneinheit zum Planen der Trajektorie zum Bewegen der geometrischen Figur auf einen einen freien Parkplatz repräsentierenden Bereich der Karte ausgebildet, wobei das Bewegen derart vorgesehen ist, dass die geometrische Figur niemals den Sperrbereich überlappt oder den befahrbaren Bereich niemals auch nur teilweise verlässt.

Ein dritter Aspekt der Erfindung betrifft ein Parksystem für eine mehrere Parkplätze aufweisende Parkplatzumgebung zum Planen einer Trajektorie für ein autonomes Parken eines Kraftfahrzeugs in der Parkplatzumgebung. Das Parksystem umfasst eine erste Erfassungseinrichtung zum Ermitteln einer Abmessungen des Kraftfahrzeugs betreffenden geometrischen Figur. Außerdem umfasst das Parksystem eine zweite Erfassungseinrichtung zum Erfassen einer Parkplatzbelegung der mehreren Parkplätze beispielsweise durch geparkte Kraftfahrzeuge. Das Parksystem umfasst außerdem ein oben genanntes Steuergerät zum Planen einer Trajektorie, wobei die Empfangseinheit insbesondere zum Empfangen der geometrischen Figur von der ersten Erfassungseinrichtung und zum Empfangen der Parkplatzbelegung von der zweiten Erfassungseinrichtung ausgebildet ist.

Weitere Merkmale der Erfindung ergeben sich aus den Ansprüchen, den Figuren und der Figurenbeschreibung.

Dabei zeigen:
- Fig. 1: eine schematische Draufsicht auf eine Parkplatzumgebung mit einem Parksystem zum Planen einer Trajektorie zum Parken eines Kraftfahrzeugs gemäß eines Ausführungsbeispiels des erfindungsgemäßen Verfahrens, und
- Fig. 2: ein Flussdiagramm eines Ausführungsbeispiels des erfindungsgemäßen Verfahrens.

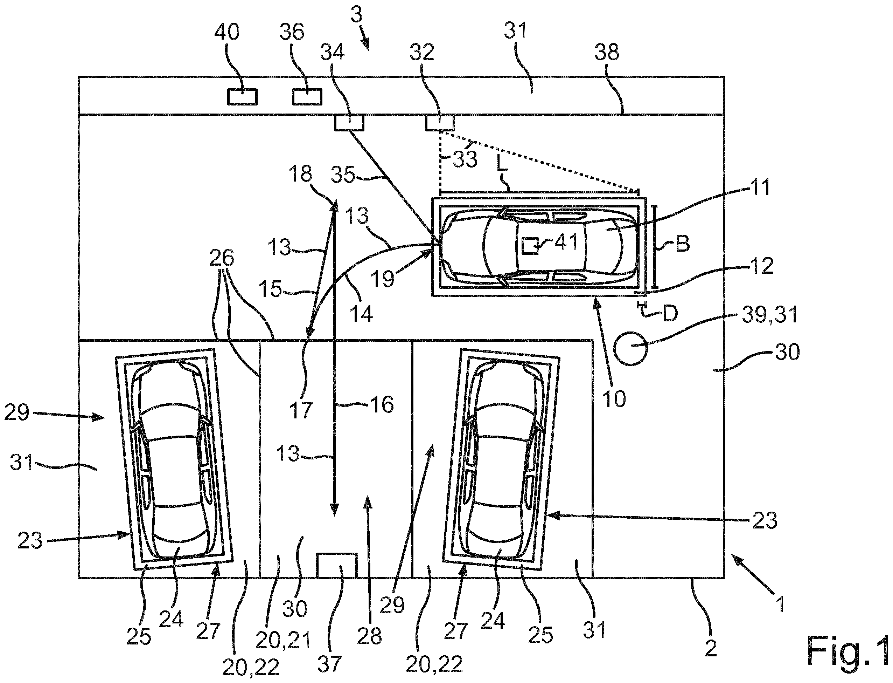

Fig. 1 zeigt in einer schematischen Draufsicht eine Parkplatzumgebung 1 mit einem Parksystem 3 zum Planen einer Trajektorie 13 zum Parken eines Kraftfahrzeugs 11. Das Parksystem 3 umfasst vorliegend eine erste Erfassungseinrichtung 32, eine zweite Erfassungseinrichtung 37 sowie eine dritte Erfassungseinrichtung 34. Das Kraftfahrzeug 11 kann durch einen Fahrer zum selbständigen Parken auf einem freien Parkplatz 21 in der Parkplatzumgebung zurückgelassen werden, insbesondere an einem dafür vorgesehenen Übergabepunkt. Beispielsweise umfasst die Parkplatzumgebung 1 ein System zum Führen des Kraftfahrzeugs 11 von einem Eingang der Parkplatzumgebung, insbesondere einem Parkplatz, einer Tiefgarage oder einem Parkhaus, hin zu dem freien Parkplatz 21. Beispielsweise verfügt das Kraftfahrzeug 11 über keine ausreichende Sensorik zum Ermitteln einer Position des Kraftfahrzeugs 11 in der Parkplatzumgebung 1 und/oder zum Ermitteln eines Abstandes des Kraftfahrzeugs 11 von einem fahrzeugexternen Gegenstand, insbesondere einer Wand 38 eines Parkhauses, oder einem weiteren Kraftfahrzeugs 24. Die Führung des Kraftfahrzeugs 11 kann insbesondere vollständig von der Parkumgebung 1 übernommen werden.

Eine erste Erfassungseinrichtung 32 der Parkplatzumgebung 1 ermittelt Abmessungswerte L, B des Kraftfahrzeugs 11. Insbesondere betreffen die Abmessungswerte L, B eine Länge sowie eine Breite des Kraftfahrzeugs 11. Anhand der Abmessungswerte L, B wird eine geometrische Figur 10 ermittelt, welche Abmessungen des Kraftfahrzeugs 11 betrifft. Dabei wird die geometrische Figur 10 anhand der Abmessungswerte L, B ermittelt, wobei zu jeder Seite hin ein Sicherheitsabstand 12 der Breite D zu den Abmessungswerten L, B addiert wird. Die Breite D des Sicherheitsabstands 12 kann an Ungenauigkeiten beim Ermitteln der Abmessungen des Kraftfahrzeugs 11, an Ungenauigkeiten bei einer Lokalisierung des Kraftfahrzeugs 11 und/oder an Ungenauigkeiten bei einem autonomen Folgen der Trajektorie 13 durch das Kraftfahrzeugs 11 angepasst sein. Insbesondere dient der Sicherheitsabstand 12 dazu, eine Kollision des Kraftfahrzeugs 11 aufgrund einer Ungenauigkeit oder aufgrund eines Fehlers zu vermeiden.

Die erste Erfassungseinrichtung 32 der Parkplatzumgebung 1 ist vorliegend als Lasermesseinheit zum Vermessen des Kraftfahrzeugs 11 mittels eines Laserstrahls 33 zum Ermitteln der Abmessungswerte L, B des Kraftfahrzeugs 11 ausgebildet. In anderen nicht gezeigten Ausführungsformen kann die erste Erfassungseinrichtung 32 alternativ oder zusätzlich als Radarsensor, Lichtschranke, Ultraschallsensor und/oder Lidar-Sensor ausgebildet sein. Die erste Erfassungseinrichtung 32 kann insbesondere am Eingang der Parkplatzumgebung 1 und/oder an dem Übergabeplatz, an dem der Fahrer das Kraftfahrzeug 11 zum autonomen Parken zurücklässt, angeordnet sein.

Eine zweite Erfassungseinrichtung 37 der Parkplatzumgebung 1 ist zum Erfassen einer Parkplatzbelegung 23 der mehreren Parkplätze 20 ausgebildet. Beispielsweise ist jedem der mehreren Parkplätze 20 eine eigene zweite Erfassungseinrichtung 37 zugeordnet. Vorliegend ist eine zweite Erfassungseinrichtung 37 mehreren Parkplätzen 20 zugeordnet. Die zweite Erfassungseinrichtung 37 ist vorliegend als Kamera ausgebildet. In anderen nicht gezeigten Ausführungsformen kann die zweite Erfassungseinrichtung 37 alternativ oder zusätzlich als Radarsensor, Ultraschallsensor, RFID-Sensor zur Erfassung eines RFID-Transponders am Kraftfahrzeug 11, oder Lidar-Sensor ausgebildet sein. Befindet sich auf einem der mehreren Parkplätze 20 ein Gegenstand, insbesondere das weitere Kraftfahrzeug 24, durch den der jeweilige Parkplatz 20 belegt ist, so erfasst die zweite Erfassungseinrichtung 37 den jeweiligen Parkplatz 20 als belegten Parkplatz 22. Befindet sich auf einem der mehreren Parkplätze 20 kein Gegenstand, insbesondere das weitere Kraftfahrzeug 24, durch den der jeweilige Parkplatz 20 belegt ist, so erfasst die zweite Erfassungseinrichtung 37 den jeweilige Parkplatz 20 als freien Parkplatz 21.

Jeder der mehreren Parkplätze 20 kann durch jeweilige Parkplatzgrenzen 26 in der Karte 2 der Parkplatzumgebung 1 definiert sein. Die Parkplatzgrenzen 26 können entweder fest oder variabel sein. Wird für einen der mehreren Parkplätze 20 eine Parkplatzbelegung 23 erfasst, so wird der den belegten Parkplatz 22 repräsentierende Bereich 29 in der Karte 2 vollständig als gesperrter Teilbereich des Sperrbereichs 31 ermittelt. Kann das weitere Kraftfahrzeug 24 auf dem belegten Parkplatz 22 genau lokalisiert werden, so kann vorgesehen sein, dass die Parkplatzgrenzen 26 variabel angepasst werden. Insbesondere kann vorgesehen sein, dass die Parkplatzgrenzen 26 an eine geometrische Figur 27 des weiteren Kraftfahrzeugs 24 angepasst werden. Die geometrische Figur 27 des weiteren Kraftfahrzeugs 24 ist insbesondere anhand der Abmessungen des weiteren Kraftfahrzeugs 24 sowie einem Sicherheitsabstand 25 ermittelt. Dabei ist insbesondere stets sichergestellt, dass die geometrische Figur 27 des weiteren Kraftfahrzeugs 24 vollständig beziehungsweise mit jedem Punkt innerhalb der Parkplatzgrenzen 26 liegt. Auf diese Weise kann ein Bereich, der unnötigerweise als Sperrbereich 31 ermittelt wurde, als befahrbarer Bereich 30 ermittelt werden.

Mittels eines Steuergeräts 36 der Parkplatzumgebung 1 wird entweder ein befahrbarer Bereich 30 oder ein Sperrbereich 31 der Parkplatzumgebung 1 anhand einer Karte 2 der Parkplatzumgebung 1 sowie anhand der erfassten Parkplatzbelegung 23 ermittelt. Der befahrbare Bereich 30 umfasst beispielsweise freie Flächen, befahrbare Flächen, Fahrstreifen, und/oder den freien Parkplatz 21 repräsentierende Bereiche in der Karte 2 der Parkplatzumgebung 1. Der nicht befahrbare Bereich 31 der Parkplatzumgebung 1 umfasst insbesondere Hindernisse, Säulen 39, Wände 38, und/oder belegte Parkplätze 22 repräsentierende Bereiche in der Karte 2 der Parkplatzumgebung 1.

Durch das Steuergerät 36 wird eine Trajektorie 13 zum Bewegen der geometrischen Figur 10 auf einen einen freien Parkplatz 21 repräsentierenden Bereich 28 der Karte 2 geplant. Dabei wird die Trajektorie 13 derart geplant, dass die geometrische Figur 10 niemals den Sperrbereich 31 überlappt oder den befahrbaren Bereich 30 niemals auch nur teilweise verlässt. Beim Planen der Trajektorie 13 ist insbesondere vorgesehen, dass die geometrische Figur 10 am Ende der Trajektorie 13 vollständig innerhalb der Parkplatzgrenzen 26 des den freien Parkplatz 21 repräsentierenden Bereich 28 der Karte 2 liegt. Insbesondere ist vorgesehen, dass die geometrische Figur 10 niemals den einen belegten Parkplatz 22 repräsentierenden Bereich 29, einen eine Säule 39 repräsentierenden Bereich und/oder einen eine Wand 38 repräsentierenden Bereich überlappt. Es kann vorgesehen sein, dass die Trajektorie 13 derart geplant wird, dass die geometrische Figur 10 niemals auch nur mit einem Punkt außerhalb des befahrbaren Bereichs 30 liegt.

Die Trajektorie 13 ist vorliegend durch mehrere Teiltrajektorien 14, 15, 16 gebildet. Beispielsweise ist es nicht möglich, die geometrische Figur 10 auf den den freien Parkplatz 21 repräsentierenden Bereich 28 zu verschieben, ohne zu rangieren. Vorliegend wird die geometrische Figur 10 entlang der Teiltrajektorie 14 nach vorne bewegt, in einem Gangwechselpunkt 17 wird die Bewegungsrichtung geändert. Demnach kann die geometrische Figur 10 gemäß der Teiltrajektorie 15 rückwärts bewegt werden. In einem weiteren Gangwechselpunkt 18 kann wiederum die Bewegungsrichtung der geometrischen Figur 10 verändert werden, woraufhin die geometrische Figur 10 gemäß der Teiltrajektorie 16 vorwärts vollständig in den den freien Parkplatz 21 repräsentierenden Bereich 28 einfährt. Die Bewegungsrichtungen nach vorne beziehungsweise nach hinten sind an die Normalfahrtrichtung des Kraftfahrzeugs 11, welches die geometrische Figur 10 repräsentiert, angelehnt.

Eine dritte Erfassungseinrichtung 34 der Parkplatzumgebung 1 kann zur Lokalisierung des Kraftfahrzeugs 11 ausgebildet sein. Vorliegend ist die dritte Erfassungseinrichtung 34 als Lidar-System ausgebildet, wobei eine Position des Kraftfahrzeugs 11 mittels eines Laserstrahls 35 ermittelt wird. Die dritte Erfassungseinrichtung 34 kann alternativ oder zusätzlich beispielsweise als Radarsensor oder als Ultraschallsensor ausgeführt sein. Gemäß der Position des Kraftfahrzeugs 11 in der Parkplatzumgebung 1 wird die geometrische Figur 10 in der Karte 2 positioniert. Insbesondere entspricht die Position der geometrischen Figur 10 in der Karte 2 der Position des Kraftfahrzeugs 11 in der Parkplatzumgebung 1. Dadurch weist die Trajektorie 13 einen Startpunkt 19 auf, welcher sowohl für die Bewegung der geometrischen Figur 10 in den den freien Parkplatz 21 repräsentierenden Bereich 28 passend ist, als auch für eine autonome Fahrt des Kraftfahrzeugs 11 auf den freien Parkplatz 21.

Vorzugsweise ist vorgesehen, dass mittels der für die geometrische Figur 10 geplanten Trajektorie 13 das Kraftfahrzeug 11, insbesondere auf den freien Parkplatz 21, eingeparkt wird. Hierzu kann die Trajektorie 13 beispielsweise mittels einer Kommunikationseinrichtung 40 an das Kraftfahrzeug 11 beziehungsweise eine korrespondierende Empfangseinrichtung 41 gesendet beziehungsweise übermittelt werden. Vorzugsweise erfolgt die Übermittlung kabellos, beispielsweise über Wifi oder Bluetooth. Da die Bewegung der geometrischen Figur 10 entlang der Trajektorie 13 anhand der Karte 2, welche die räumliche Anordnung der Parkplatzumgebung 1 repräsentiert, kollisionsfrei ist, ist auch eine anhand der Trajektorie 13 durchgeführte autonome Fahrt des Kraftfahrzeugs 11 kollisionsfrei. Insbesondere kann das Kraftfahrzeug 11 die Fahrt entlang der Trajektorie 13 ausführen, ohne dass weitere Messungen und/oder Abstandsmessungen und/oder Positionsbestimmungen des Kraftfahrzeugs 11 währenddessen nötig sind. Das Kraftfahrzeug 11 kann die Trajektorie 13 vorliegend selbständig autonom abfahren. Mittels der dritten Erfassungseinrichtung 34 kann beispielsweise ermittelt werden, ob das Kraftfahrzeug 11 der Trajektorie 13 wie geplant folgt.

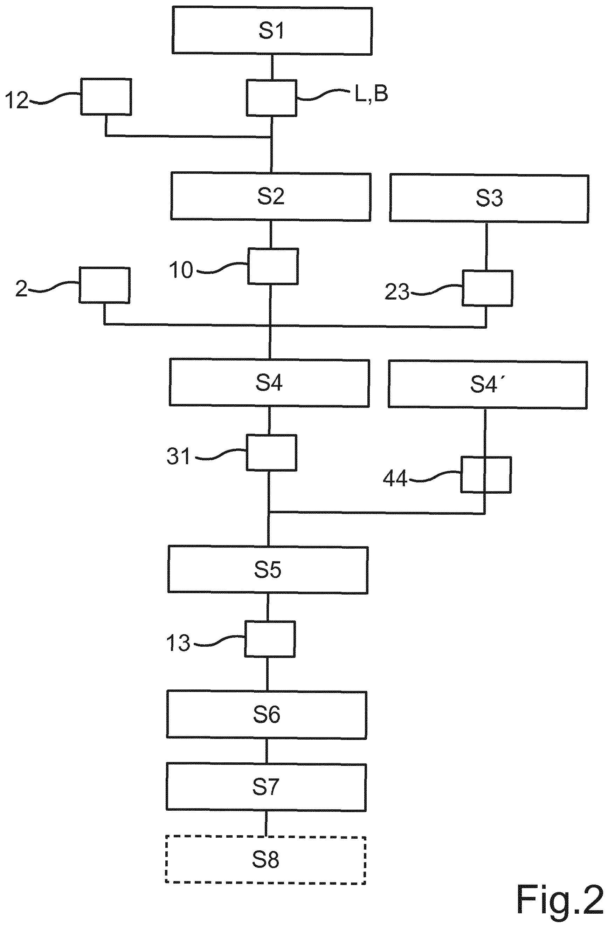

Die Fig. 2 zeigt in einem Flussdiagramm ein Ausführungsbeispiel eines Verfahrens zum Ermitteln einer Trajektorie 13. In einem ersten Schritt S1 werden Abmessungen des Kraftfahrzeugs 11, insbesondere die Länge und Breite repräsentierenden Abmessungswerte L, B durch die erste Erfassungseinrichtung 32 ermittelt. In einem Schritt S2 wird anhand der Abmessungswerte L, B sowie des vordefinierten Sicherheitsabstandes 12 die geometrische Figur 10 ermittelt. Die Parkplatzbelegung 23 der mehreren Parkplätze 20 wird in einem Schritt S3 durch die zweite Erfassungseinrichtung 37 erfasst. Anhand der Parkplatzbelegung 23 sowie der Karte 2 der Parkplatzumgebung 1 wird in einem nächsten Schritt S4 ein Sperrbereich 31 ermittelt. In dem Schritt S4' kann durch die dritte Erfassungseinrichtung 34 die Position 44 des Kraftfahrzeugs 11 in der Parkplatzumgebung 1 ermittelt werden und der geometrischen Figur 10 eine dementsprechende Position in der Karte 2 der Parkplatzumgebung 1 zugeteilt werden.

Die geometrische Figur 10 wird in der virtuellen Karte 2 in einem Schritt S5 derart auf den den freien Parkplatz 21 repräsentierenden Bereich 28 der Karte 2 bewegt, dass die geometrische Figur 10 niemals den befahrbaren Bereich 31 überlappt. Durch Verschieben der geometrischen Figur 10 wird die Trajektorie 13 ermittelt beziehungsweise geplant. Vorzugsweisebefindet sich die geometrische Figur 10 am Ende der Trajektorie 13 vollständig innerhalb der Parkplatzgrenzen 26 des den freien Parkplatz 21 repräsentierenden Bereichs 28. Die für die geometrische Figur 10 geplante Trajektorie 13 wird in einem Schritt S6 mittels der Kommunikationseinrichtung 40 an das Kraftfahrzeug 11 beziehungsweise dessen korrespondierende Empfangseinrichtung 41 übermittelt. Das Kraftfahrzeug 11 führt daraufhin in einem Schritt S7 einen autonomen Parkvorgang gemäß der Trajektorie 13 aus. Optionalerweise kann das Kraftfahrzeug 11 während des Parkvorgangs gemäß der Trajektorie 13 durch dritte Erfassungseinrichtung 34 überwacht werden.

In einer anderen Ausführungsform kann im Zuge des Schrittes S4 ein befahrbarer Bereich 30 ermittelt werden. Dann kann in dem Schritt S5 die Trajektorie 13 zum Bewegen der geometrischen Figur 10 derart ermittelt werden, dass die geometrische Figur 10 niemals den Sperrbereich 31 auch nur teilweise verlässt. Das Planen der Trajektorie 13 anhand des befahrbaren Bereichs 30 und des Sperrbereichs 31 ist daher als äquivalent anzusehen.

## Patentansprüche

1. Verfahren zum Planen einer Trajektorie (13) zum autonomen Parken eines Kraftfahrzeugs (11) in einer Parkplatzumgebung (1) mit mehreren Parkplätzen (20), mit den Schritten:
- Ermitteln (S1, S2) von Abmessungswerten (L, B) des Kraftfahrzeugs (11) betreffenden geometrischen Figur (10) durch eine erste Erfassungseinrichtung (32) der Parkplatzumgebung (1), wobei die Abmessungswerte (L, B) eine Länge (L) und eine Breite (B) des Kraftfahrzeugs umfassen,
- Erfassen (S3) einer Parkplatzbelegung (23) der mehreren Parkplätze (20) durch eine zweite Erfassungseinrichtung (37) der Parkplatzumgebung (1),
- Ermitteln (S4) eines befahrbaren Bereichs (30) oder Sperrbereichs (31) der Parkplatzumgebung (1) anhand einer Karte (2) der Parkplatzumgebung (1) und anhand der erfassten Parkplatzbelegung (23) durch ein Steuergerät (36) der Parkplatzumgebung (1),
- Planen der Trajektorie (13) zum Bewegen der geometrischen Figur (10) auf einen einen freien Parkplatz (21) repräsentierenden Bereich (28) der Karte (2) durch das Steuergerät (36) der Parkplatzumgebung (1) derart, dass die geometrische Figur (10) niemals den Sperrbereich (31) überlappt oder den befahrbaren Bereich (30) niemals auch nur teilweise verlässt,
**dadurch gekennzeichnet, dass**
die geometrische Figur (10) zum Planen der Trajektorie (13) anhand des tatsächlichen Abmessungswerts (L, B) des Kraftfahrzeugs (11) und eines vordefinierten Sicherheitsabstands (12) ermittelt wird, wobei der Sicherheitsabstand (12) zwischen 10 und 50cm beträgt, und wobei zu jeder Seite hin der Sicherheitsabstand (12) zu den Abmessungswerten (L, B) addiert wird.

2. Verfahren nach einem der vorhergehenden Ansprüche,
**dadurch gekennzeichnet, dass**
die geometrische Figur (10) im Wesentlichen rechteckig ist.

3. Verfahren nach einem der vorhergehenden Ansprüche,
**dadurch gekennzeichnet, dass**
jeder einen Parkplatz (20) repräsentierende Bereich (28, 29) in der Karte der Parkplatzumgebung durch jeweilige Parkplatzgrenzen (26) definiert ist und der gesamte Bereich innerhalb der jeweiligen Parkplatzgrenzen (26) als gesperrter Teilbereich ermittelt wird, wenn für einen jeweiligen Parkplatz (20) eine Parkplatzbelegung (23) erfasst wurde.

4. Verfahren nach einem der Ansprüche 1 bis 2,
**dadurch gekennzeichnet, dass**
jeder Parkplatz (20) in der Karte (2) der Parkplatzumgebung (1) durch jeweilige variable, von einem Belegungsgrad des Parkplatzes abhängige Parkplatzgrenzen (26) definiert ist und der gesamte Bereich innerhalb der jeweiligen Parkplatzgrenzen (26) als gesperrter Teilbereich ermittelt wird, wenn für einen jeweiligen Parkplatz (20) eine Parkplatzbelegung (23) erfasst wurde.

5. Verfahren nach einem der vorhergehenden Ansprüche,
**dadurch gekennzeichnet, dass**
die geometrische Figur (10) am Ende der Trajektorie (13) vollständig innerhalb des den freien Parkplatz 21 repräsentierenden Bereichs (28) liegt.

6. Verfahren nach einem der vorhergehenden Ansprüche,
**dadurch gekennzeichnet, dass**
die Trajektorie (13) durch mehrere Teiltrajektorien (14, 15, 16) gebildet ist, welche nacheinander geplant werden.

7. Verfahren nach einem der vorhergehenden Ansprüche,
**dadurch gekennzeichnet, dass**
mittels der für die geometrische Figur (10) geplanten Trajektorie (13) das Kraftfahrzeug (11) eingeparkt wird.

8. Verfahren nach einem der vorhergehenden Ansprüche,
**dadurch gekennzeichnet, dass**
die für die geometrischen Figur (10) geplante Trajektorie (13) dem Kraftfahrzeug (11) mittels einer Kommunikationseinrichtung (40) der Parkplatzumgebung (1) übermittelt wird.

9. Verfahren nach einem der vorhergehenden Ansprüche,
**dadurch gekennzeichnet, dass**
das Kraftfahrzeug (11) durch eine dritte Erfassungseinrichtung (34) der Parkplatzumgebung (1) für das Planen der Trajektorie (13) lokalisiert wird.

10. Steuergerät (36) zum Planen einer Trajektorie (13) zum autonomen Parken eines Kraftfahrzeugs (11) in einer Parkplatzumgebung (1) mit mehreren Parkplätzen (20), mit
- einer Empfangseinheit zum Empfangen von Abmessungswerten (L, B) des Kraftfahrzeugs (11) betreffenden geometrischen Figur (10) und einer Parkplatzbelegung (23) der mehreren Parkplätze (20), wobei die Abmessungswerte (L, B) eine Länge (L) und eine Breite (B) des Kraftfahrzeugs umfassen und
- einer Recheneinheit zum Ermitteln eines befahrbaren Bereichs (30) oder Sperrbereichs (31) der Parkplatzumgebung (1) anhand einer Karte (2) der Parkplatzumgebung (1) und anhand der ermittelten Parkplatzbelegung (23) und zum Planen der Trajektorie (13) zum Bewegen der geometrischen Figur (10) auf einen einen freien Parkplatz (21) repräsentierenden Bereich (28) der Karte (2) derart, dass die geometrische Figur (10) niemals den Sperrbereich (31) überlappt oder den befahrbaren Bereich (30) niemals auch nur teilweise verlässt, **dadurch gekennzeichnet, dass** das Steuergerät (36) dazu eingerichtet ist, die geometrische Figur (10) zum Planen der Trajektorie (13) anhand des tatsächlichen Abmessungswerts (L, B) des Kraftfahrzeugs (11) und eines vordefinierten Sicherheitsabstands (12) zu ermitteln, wobei der Sicherheitsabstand (12) zwischen 10 und 50cm beträgt, und wobei zu jeder Seite hin der Sicherheitsabstand (12) zu den Abmessungswerten (L, B) addiert wir.

11. Parksystem (3) für eine mehrere Parkplätze (20) aufweisende Parkplatzumgebung (1) zum Planen einer Trajektorie (13) für ein autonomes Parken eines Kraftfahrzeugs (11) in der Parkplatzumgebung (1), mit
- einer ersten Erfassungseinrichtung (32) der Parkplatzumgebung (1) zum Ermitteln von Abmessungswerten (L, B) des Kraftfahrzeugs (11) betreffenden geometrischen Figur (10), wobei die Abmessungswerte (L, B) eine Länge (L) und eine Breite (B) des Kraftfahrzeugs umfassen,
- einer zweiten Erfassungseinrichtung (37) der Parkplatzumgebung (1) zum Erfassen einer Parkplatzbelegung (23) der mehreren Parkplätze (20) und
- einem Steuergerät (36) nach Anspruch 10.

## Claims

1. Method for planning a trajectory (13) for autonomously parking a motor vehicle (11) in a parking space environment (1) having a plurality of parking spaces (20), having the steps of:
- ascertaining (S1, S2) a geometric shape (10) related to dimension values (L, B) of the motor vehicle (11) by way of a first capturing device (32) of the parking space environment (1), wherein the dimension values (L, B) comprise a length (L) and a width (B) of the motor vehicle,
- capturing (S3) a parking space occupancy (23) of the plurality of parking spaces (20) by way of a second capturing device (37) of the parking space environment (1),
- ascertaining (S4) an accessible region (30) or prohibited region (31) of the parking space environment (1) using a map (2) of the parking space environment (1) and using the captured parking space occupancy (23) by way of a control unit (36) of the parking space environment (1),
- planning the trajectory (13) for moving the geometric shape (10) onto a region (28) of the map (2) representing a free parking space (21) by way of the control unit (36) of the parking space environment (1) such that the geometric shape (10) never overlaps the prohibited region (31) or never leaves the accessible region (30) even in part,
**characterized in that**
the geometric shape (10) is ascertained for planning the trajectory (13) using the actual dimension value (L, B) of the motor vehicle (11) and a predefined safety distance (12), wherein the safety distance (12) is between 10 and 50 cm, and wherein the safety distance (12) is added to the dimension values (L, B) on every side.

2. Method according to one of the preceding claims,
**characterized in that**
the geometric shape (10) is substantially rectangular.

3. Method according to either of the preceding claims,
**characterized in that**
each region (28, 29) representing a parking space (20) in the map of the parking space environment is defined by respective parking space boundaries (26) and the entire region within the respective parking space boundaries (26) is ascertained as a prohibited partial region if a parking space occupancy (23) has been captured for a respective parking space (20).

4. Method according to one of Claims 1 to 2,
**characterized in that**
each parking space (20) in the map (2) of the parking space environment (1) is defined by respective variable parking space boundaries (26) that depend on a degree of occupancy of the parking space and the entire region within the respective parking space boundaries (26) is ascertained as a prohibited partial region if a parking space occupancy (23) has been captured for a respective parking space (20).

5. Method according to one of the preceding claims,
**characterized in that**
the geometric shape (10) at the end of the trajectory (13) lies entirely within the region (28) representing the free parking space (21).

6. Method according to one of the preceding claims,
**characterized in that**
the trajectory (13) is formed by a plurality of partial trajectories (14, 15, 16), which are planned successively.

7. Method according to one of the preceding claims,
**characterized in that**
the motor vehicle (11) is parked by means of the trajectory (13) planned for the geometric shape (10).

8. Method according to one of the preceding claims,
**characterized in that**
the trajectory (13) planned for the geometric shape (10) is transmitted to the motor vehicle (11) by means of a communication device (40) of the parking space environment (1).

9. Method according to one of the preceding claims,
**characterized in that**
the motor vehicle (11) is localized by a third capturing device (34) of the parking space environment (1) for planning the trajectory (13).

10. Control unit (36) for planning a trajectory (13) for autonomously parking a motor vehicle (11) in a parking space environment (1) having a plurality of parking spaces (20), having
- a receiving unit for receiving a geometric shape (10) related to dimension values (L, B) of the motor vehicle (11) and a parking space occupancy (23) of the plurality of parking spaces (20), wherein the dimension values (L, B) comprise a length (L) and a width (B) of the motor vehicle and
- a computation unit for ascertaining an accessible region (30) or prohibited region (31) of the parking space environment (1) using a map (2) of the parking space environment (1) and using the ascertained parking space occupancy (23) and for planning the trajectory (13) for moving the geometric shape (10) onto a region (28) of the map (2) representing a free parking space (21) such that the geometric shape (10) never overlaps the prohibited region (31) or never leaves the accessible region (30) even in part, **characterized in that** the control unit (36) is configured to ascertain the geometric shape (10) for planning the trajectory (13) using the actual dimension value (L, B) of the motor vehicle (11) and a predefined safety distance (12), wherein the safety distance (12) is between 10 and 50 cm, and wherein the safety distance (12) is added to the dimension values (L, B) on every side.

11. Parking system (3) for a parking space environment (1) having a plurality of parking spaces (20) for planning a trajectory (13) for autonomously parking a motor vehicle (11) in the parking space environment (1), having
- a first capturing device (32) of the parking space environment (1) for ascertaining a geometric shape (10) related to dimension values (L, B) of the motor vehicle (11), wherein the dimension values (L, B) comprise a length (L) and a width (B) of the motor vehicle,
- a second capturing device (37) of the parking space environment (1) for capturing a parking space occupancy (23) of the plurality of parking spaces (20) and
- a control unit (36) according to Claim 10.

## Revendications

1. Procédé de planification d'une trajectoire (13) destiné au stationnement autonome d'un véhicule automobile (11) dans une aire de stationnement (1) comportant une pluralité de places de stationnement (20), ledit procédé comprenant les étapes suivantes :
- déterminer (S1, S2) une figure géométrique (10) relative à des valeurs dimensionnelles (L, B) du véhicule automobile (11) à l'aide d'un premier dispositif de détection (32) de l'aire de stationnement (1), les valeurs dimensionnelles (L, B) comprenant une longueur (L) et une largeur (B) du véhicule automobile,
- détecter (S3) un état occupé (23) pour la pluralité de places de stationnement (20) à l'aide d'un deuxième dispositif de détection (37) de l'aire de stationnement (1),
- déterminer (S4) une zone praticable (30) ou une zone interdite (31) de l'aire de stationnement (1) à l'aide d'une carte (2) de l'aire de stationnement (1) et sur la base de l'état occupé détecté (23) de l'aire de stationnement à l'aide d'un appareil de commande (36) de l'aire de stationnement (1),
- planifier la trajectoire (13) afin de déplacer la figure géométrique (10) vers une zone (28) de la carte (2) représentant une place de stationnement libre (21) à l'aide de l'appareil de commande (36) de l'aire de stationnement (1) de telle sorte que la figure géométrique (10) ne chevauche jamais la zone interdite (31) ou ne quitte jamais, même partiellement, la zone praticable (30),
**caractérisé en ce que**
la figure géométrique (10) destinée à la planification de la trajectoire (13) est déterminée sur la base de la valeur dimensionnelle réelle (L, B) du véhicule automobile (11) et d'une distance de sécurité prédéfinie (12), la distance de sécurité (12) étant comprise entre 10 et 50 cm, et la distance de sécurité (12) étant ajoutée aux valeurs dimensionnelles (L, B) de chaque côté.

2. Procédé selon l'une des revendications précédentes,
**caractérisé en ce que**
la figure géométrique (10) est sensiblement rectangulaire.

3. Procédé selon l'une des revendications précédentes,
**caractérisé en ce que**
chaque zone (28, 29) représentant une place de stationnement (20) est définie par des limites de place de stationnement respectives (26) sur la carte de l'aire de stationnement et toute la zone située à l'intérieur des limites de place de stationnement respectives (26) est déterminée comme étant une zone partielle interdite si un état occupé (23) a été détecté pour une place de stationnement respective (20).

4. Procédé selon l'une des revendications 1 et 2,
**caractérisé en ce que**
chaque place de stationnement (20) est définie sur la carte (2) de l'aire de stationnement (1) par des limites de place de stationnement variables respectives (26), dépendant du degré d'occupation de la place de stationnement et toute la zone située à l'intérieur des limites de place de stationnement respectives (26) est déterminée comme étant une zone partielle interdite si un état occupé (23) a été détecté pour une place de stationnement respective (20).

5. Procédé selon l'une des revendications précédentes,
**caractérisé en ce que**
à la fin de la trajectoire (13) la figure géométrique (10) se situe entièrement à l'intérieur de la zone (28) représentant la place de stationnement libre (21).

6. Procédé selon l'une des revendications précédentes,
**caractérisé en ce que**
la trajectoire (13) est formée d'une pluralité de trajectoires partielles (14, 15, 16) qui sont planifiées les unes après les autres.

7. Procédé selon l'une des revendications précédentes,
**caractérisé en ce que**
le véhicule automobile (11) est stationné au moyen de la trajectoire (13) planifiée pour la figure géométrique (10) .

8. Procédé selon l'une des revendications précédentes,
**caractérisé en ce que**
la trajectoire (13) planifiée pour la figure géométrique (10) est transmise au véhicule automobile (11) au moyen d'un dispositif de communication (40) dans l'aire de stationnement (1).

9. Procédé selon l'une des revendications précédentes,
**caractérisé en ce que**
le véhicule automobile (11) est localisé à l'aide d'un troisième dispositif de détection (34) de l'aire de stationnement (1) afin de planifier la trajectoire (13).

10. Appareil de commande (36) destiné à planifier une trajectoire (13) pour le stationnement autonome d'un véhicule automobile (11) dans une aire de stationnement (1) comprenant une pluralité de places de stationnement (20), ledit appareil comprenant
- une unité de réception destinée à recevoir une figure géométrique (10) relative à des valeurs dimensionnelles (L, B) du véhicule automobile (11) et un état occupé (23) de la pluralité de places de stationnement (20), les valeurs dimensionnelles (L, B) comprenant une longueur (L) et une largeur (B) du véhicule automobile, et
- une unité de calcul destinée à déterminer une zone praticable (30) ou une zone interdite (31) de l'aire de stationnement (1) sur la base d'une carte (2) de l'aire de stationnement (1) et sur la base de l'état occupé déterminé (23) de la place de stationnement et planifier la trajectoire (13) afin de déplacer la figure géométrique (10) sur une zone (28) de la carte (2) représentant une place de stationnement libre (21) de telle sorte que la figure géométrique (10) ne chevauche jamais la zone interdite (31) ou ne quitte jamais, même partiellement, la zone praticable (30), **caractérisé en ce que** l'appareil de commande (36) est conçu pour déterminer la figure géométrique (10) afin de planifier la trajectoire (13) sur la base de la valeur dimensionnelle (L, B) du véhicule automobile (11) et une distance de sécurité prédéfinie (12), la distance de sécurité (12) étant comprise entre 10 et 50 cm, et la distance de sécurité (12) étant ajoutée de chaque côté aux valeurs dimensionnelle (L, B).

11. Système de stationnement (3) destiné à une aire de stationnement (1) comportant une pluralité de places de stationnement (20) pour planifier une trajectoire (13) pour le stationnement autonome d'un véhicule automobile (11) dans l'aire de stationnement (1), ledit système comprenant
- un premier dispositif de détection (32) de l'aire de stationnement (1) destiné à déterminer une figure géométrique (10) relative à des valeurs dimensionnelles (L, B) du véhicule automobile (11), les valeurs dimensionnelles (L, B) comprenant une longueur (L) et une largeur (B) du véhicule automobile,
- un deuxième dispositif de détection (37) de l'aire de stationnement (1) destiné à détecter l'état occupé (23) de la pluralité de places de stationnement (20) et
- un appareil de commande (36) selon la revendication 10.
